# EUROPEAN PATENT SPECIFICATION

(11) **EP 2 060 478 B1**
(45) Date of publication and mention of the grant of the patent: **20.10.2010**
(21) Application number: 07120971.2
(22) Date of filing: 19.11.2007
(51) Int. Cl.: B62J 15/00

(54) **Bicycle fender having a conductive wire holding structure**
Schutzblech für ein Fahrrad mit Haltestruktur für einen leitfähigen Draht
Garde-boue pour bicyclette ayant une structure de retenue de fil conducteur

(43) Date of publication of application: 20.05.2009
(73) Proprietor: Sunnywheel Industrial Co. Ltd., No. 50, San Yi St. Yihsing Tsun Hsiushui Hsiang Changhua (TW)
(72) Inventor: Hsu, Kuo-Chung, Changhua (TW)
(74) Representative: Viering, Jentschura & Partner

(56) References cited:
- EP-A- 0 691 262
- EP-A- 1 785 342
- DE-U1- 8 527 359
- DE-U1-202007 007 398
- DE-U1-202007 007 576
- FR-A- 944 200
- GB-A- 696 326

## Description

### BACKGROUND OF THE INVENTION

### 1. Field of the Invention

The present invention relates to a bicycle fender equipped with a conductive wire holding structure to conceal the wire and improve alarm effect and aesthetic appeal.

### 2. Description of the Prior Art

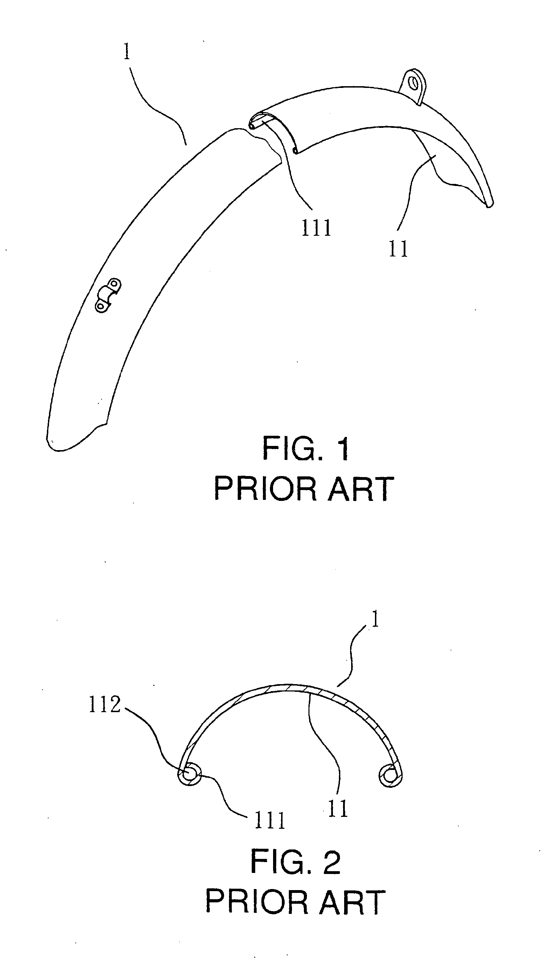

A conventional bicycle, in order to provide lighting, usually has conductive wires attached to two lateral sides or a middle portion of an inner or outer surface of the fender in a bare fashion. Such an approach has a big drawback, namely the conductive wires are exposed and easily worn, and poor contact could occur. It also is not appealing. To remedy this shortcoming, some bicycle producers provide an improvement by rolling lateral edges 111 of an inner side 11 of a metal bicycle fender 1 to form a closed side duct 112 (referring to FIGS. 1 and 2) to allow a conductive wire to thread through. But such a structure creates another problem. As the closed side duct 112 is not a genuine circle, and has a lengthy longitudinal distance, threading the conductive wire is difficult and takes a lot of time. Moreover, the conventional fender 1 usually is made of metal, and is quite heavy and more expensive. It contradicts the prevailing trend that demands slim and light. It also has a lot of constraints in terms of color selection and application.

Each of DE-U-85 27 359 and GB-A-696 326 discloses a bicycle fender having a conductive wire holding structure comprising a fender body formed integrally, the fender body having at least one holding duct located longitudinally thereon, the holding duct having a housing chamber to hold at least one conductive wire.

### SUMMARY OF THE INVENTION

In view of the aforesaid problems, the present invention aims to provide a bicycle fender equipped with a conductive wire holding structure. According to the present invention, a bicycle fender as claimed in claim 1 is provided. The sub-claims show some examples of such a bicycle fender. The fender is made from plastics and formed integrally. It has a fender body formed with at least one holding duct which has a housing chamber to hold at least one conductive wire. The wire is concealed without exposing. Such a structure can conceal the conductive wire, improve alarm effect and aesthetic appeal.

In one aspect the holding duct has a notch at one side so that the holding duct becomes elastic and can receive the conductive wire by wedging sideward.

In another aspect the conductive wire can be strung with a plurality of lighting elements.

In yet another aspect the holding duct is located at one side of the fender body, or inside the fender body.

In yet another aspect the fender body has a wedge portion at one side formed with a dovetail trough, and at least one side with a holding duct formed thereon to hold the conductive wire. The wedge portion can be wedged in by a lid. The lid is a reflective blade or an ornamental blade printed with graphics or texts, or a solar panel.

The foregoing, as well as additional objects, features and advantages of the invention will be more readily apparent from the following detailed description, which proceeds with reference to the accompanying drawings.

### BRIEF DESCRIPTION OF THE DRAWINGS

FIG. 1 is a perspective view of a conventional fender.
FIG. 2 is a cross section of a conventional fender.
FIG. 3 is an exploded view of the invention.
FIG. 4 is a cross section of the invention.
FIG. 5 is a schematic view of an embodiment of a conductive wire of the invention.
FIG. 6 is a schematic view of another embodiment of the invention.
FIG. 7 is an exploded view of another embodiment of the invention.
FIG. 8 is a cross section of another embodiment of the fender of the invention.
FIG. 9 is a cross section of yet another embodiment of the invention with the holding duct formed in the fender body.

### DESCRIPTION OF THE PREFERRED EMBODIMENTS

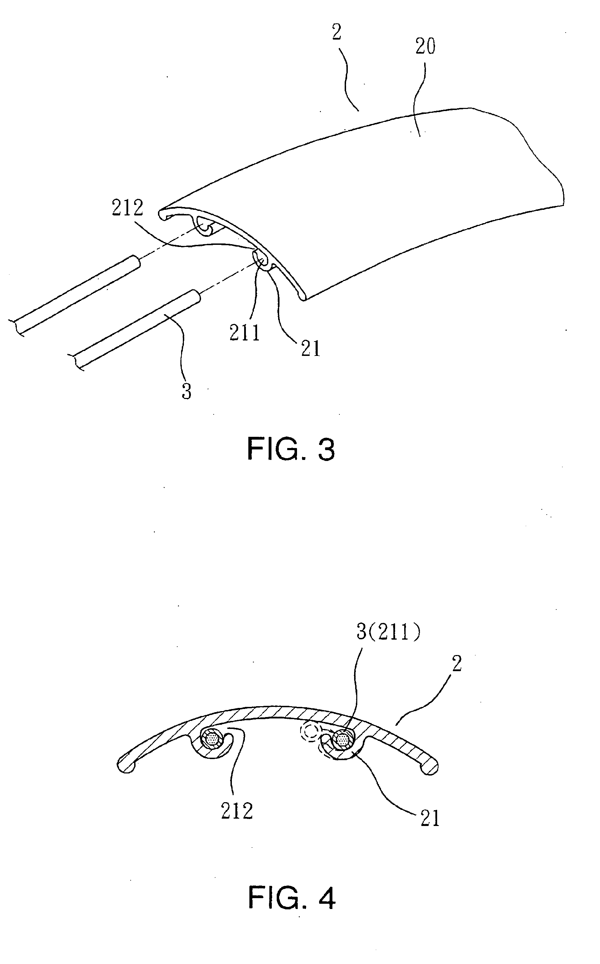

Please referring to FIGS. 3 and 4, the present invention provides a fender 2 which has a fender body 20 with at least one holding duct 21 formed thereon. The holding duct 21 has at least one housing chamber 211 to hold at least one conductive wire 3. The holding duct 21 is formed longitudinally on the fender body 20, and has a slot 212 to be wedged in by the conductive wire 3 sideward and form a retaining means.

By means of such a structure, when to install the conductive wire 3, first, place the conductive wire 3 in parallel with the slot 212 of the holding duct 21; press the conductive wire 3 sideward to enter the housing chamber 211 of the holding duct 21 which generates an elastic deformation to allow the conductive wire 3 to be wedged in and retained without escaping.

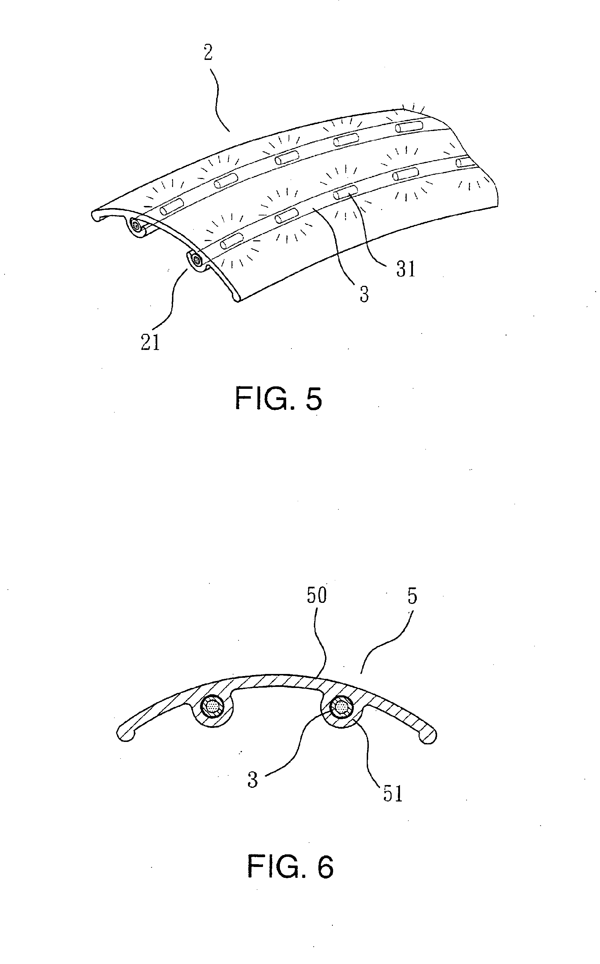

The conductive wire 3 further may be strung with a plurality of lighting elements 31, such as LEDs, lighting bulbs or the like (referring to FIG. 5). The fender 2 may be integrally made from plastics permeable to light. Hence the light elements 31 can illuminate a larger area to improve alarm effect and safety.

Refer to FIG. 6 for a second embodiment of the holding duct 51 of the invention. The conductive wire 3 can be threaded into the holding duct 51, or the holding duct 51 can be integrally formed with the fender body 50 of the fender 5. Such a structure is especially suitable to a shorter fender.

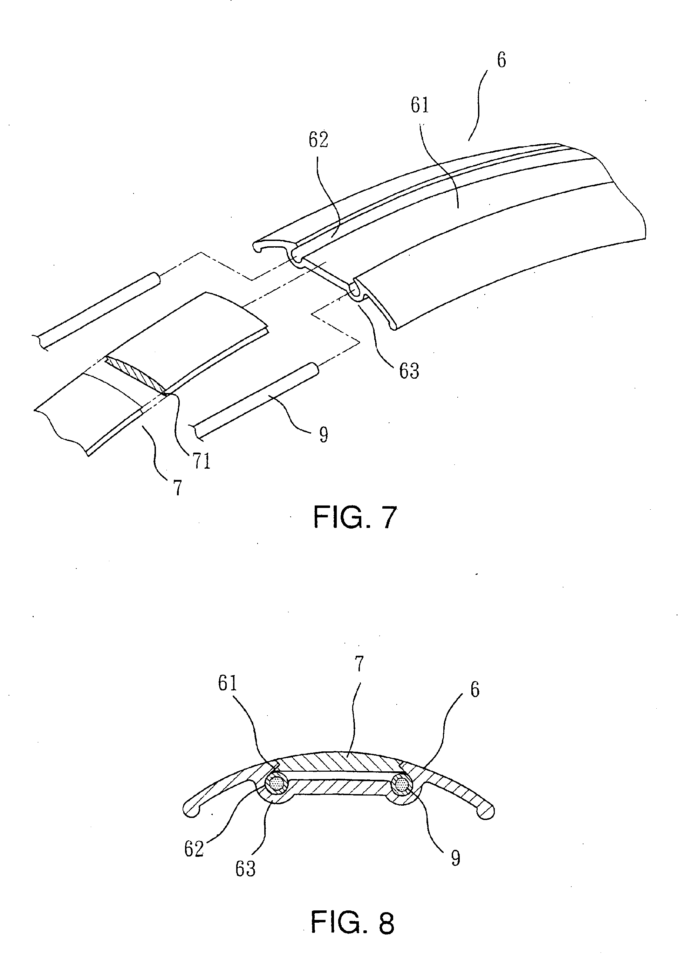

Refer to FIG. 7 for yet another embodiment of the fender 6. It has a wedge portion 61 at one side to be engaged and covered by a lid 7 through lateral edges 71. The wedge portion 61 has at least one side with a holding duct 63 formed thereon. The holding duct 63 and the wedge portion 61 are interposed by an opening 62 to allow a conductive wire 9 to be wedged in sideward into the holding duct 63. The wedge portion 61 is formed in a dovetail trough to be wedged in by the lateral edge 71 of the lid 7 to conceal the conductive wire 9. The lid 7 may be a reflective blade or an ornamental blade printed with graphics or texts, or a solar panel.

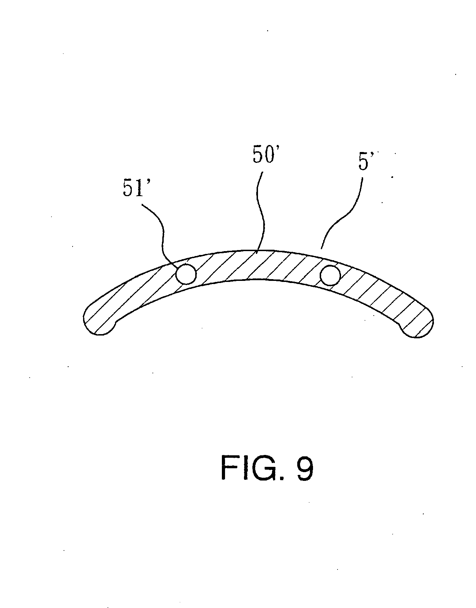

While the holding duct 51 may be located at one side of the fender body 50 (referring to FIG. 6), it also may be formed inside the fender body 50' of the fender 5' as the holding duct 51' of another embodiment shown in FIG. 9.

As a conclusion, the invention can conceal the conductive wire in the fender without exposing. It improves safety of the bicycle, and offers a significant improvement over the conventional bicycle fenders.

While the preferred embodiments of the invention have been set forth for the purpose of disclosure, modifications of the disclosed embodiments of the invention as well as other embodiments thereof may occur to those skilled in the art. Accordingly, the appended claims are intended to cover all embodiments which do not depart from the spirit and scope of the invention.

## Claims

1. A bicycle fender having a conductive wire (3, 9) holding structure comprising a fender body (20, 50, 50') formed integrally, the fender body (20, 50, 50') having at least one holding duct (21, 51, 51') located longitudinally thereon, the holding duct (21, 51, 51') having a housing chamber (211) to hold at least one conductive wire (3, 9)
**characterized in that**
the fender body (20, 50, 50') has a wedge portion (61) at one side to be wedged in by a lateral edge (71) of a lid (7), the wedge portion (61) having at least one side which has a holding duct (21, 51, 51') formed thereon, the holding duct (21, 51, 51') and the wedge portion (61) being interposed by an opening (62) to be wedged in by a conductive wire (3, 9) into the holding duct (21, 51, 51').

2. The bicycle fender of claim 1, wherein the holding duct (21, 51, 51') is located at one side of the fender body (20, 50, 50').

3. The bicycle fender of claim 1, wherein the holding duct (21, 51, 51') is located inside the fender body (20, 50, 50').

4. The bicycle fender of claim 1, wherein the holding duct (21, 51, 51') has a slot (212).

5. The bicycle fender of claim 1, wherein the fender (2, 5') is made from plastics.

## Patentansprüche

1. Fahrradschutzvorrichtung mit einer Haltestruktur für einen leitfähigen Draht (3, 9), die einen in einem Stück ausgebildeten Schutzvorrichtungskörper (20, 50, 50') aufweist, wobei der Schutzvorrichtungskörper (20, 50, 50') mindestens einen Haltekanal (21, 51, 51') aufweist, der an ihm längs angeordnet ist, wobei der Haltekanal (21, 51, 51') eine Gehäusekammer (211) zum Halten mindestens eines leitfähigen (3, 9) Drahtes aufweist,
**dadurch gekennzeichnet, dass**
der Schutzvorrichtungskörper (20, 50, 50') einen Klemmabschnitt (61) auf einer Seite zum Einklemmen eines Seitenrandes (71) eines Deckels (7) aufweist, wobei der Klemmabschnitt (61) mindestens eine Seite mit einem an ihm ausgebildeten Haltekanal (21, 51, 51') aufweist, wobei zwischen den Haltekanal (21, 51, 51') und den Klemmabschnitt (61) eine Öffnung (62) zum Hineinklemmen eines leitfähigen Drahtes (3, 9) in den Haltekanal (21, 51, 51') zwischengeschaltet ist.

2. Fahrradschutzvorrichtung gemäß Anspruch 1, wobei der Haltekanal (21, 51, 51') an einer Seite des Schutzvorrichtungskörpers (20, 50, 50') angeordnet ist.

3. Fahrradschutzvorrichtung gemäß Anspruch 1, wobei der Haltekanal (21, 51, 51') innerhalb des Schutzvorrichtungskörpers (20, 50, 50') angeordnet ist.

4. Fahrradschutzvorrichtung gemäß Anspruch 1, wobei der Haltekanal (21, 51, 51') einen Schlitz (212) aufweist.

5. Fahrradschutzvorrichtung gemäß Anspruch 1, wobei die Schutzvorrichtung (2, 5') aus Kunststoff hergestellt ist.

## Revendications

1. Garde-boue pour bicyclette ayant une structure de retenue en fil conducteur (3, 9) comprenant un corps de garde-boue (20, 50, 50') formé d'un seul tenant, le corps de garde-boue (20, 50, 50') ayant au moins un conduit de retenue (21, 51, 51') situé longitudinalement à celui-ci, le conduit de retenue (21, 51, 51') ayant une chambre de réception (211) pour maintenir au moins un fil conducteur (3, 9) **caractérisé en ce que** le corps de garde-boue (20, 50, 50') possède sur un côté une partie de cale (61) où doit se caler un bord latéral (71) d'un couvercle (7), la partie de cale (61) ayant au moins un côté qui possède un conduit de retenue (21, 51, 51') formé sur celle-ci, le conduit de retenue (21, 51, 51') et la partie de cale (61) étant séparés par une ouverture (62) où doit se caler un fil conducteur (3, 9) dans le conduit de retenue (21, 51,51').

2. Garde-boue pour bicyclette selon la revendication 1, dans lequel le conduit de retenue (21, 51, 51') est situé sur un côté du corps de garde-boue (20, 50, 50').

3. Garde-boue pour bicyclette selon la revendication 1, dans lequel le conduit de retenue (21, 51, 51') est situé à l'intérieur du corps de garde-boue (20, 50, 50').

4. Garde-boue pour bicyclette selon la revendication 1, dans lequel le conduit de retenue (21, 51, 51') possède une fente (212).

5. Garde-boue pour bicyclette selon la revendication 1, dans lequel le garde-boue (2, 5') est fait de matière plastique.
